# EUROPEAN PATENT APPLICATION

(11) **EP 4 810 639 A1**
(43) Date of publication of application: **23.09.2026**
(21) Application number: 26165812.4
(22) Date of filing: 18.03.2026
(51) Int. Cl.: C22C 33/02, B22F 1/05, B22F 10/25, B23K 1/00, B33Y 40/10, B33Y 70/00, C21D 6/00, C22C 38/00, C22C 38/02, C22C 38/04, C22C 38/44, C22C 38/46, C22C 38/52, C22C 38/54, C22C 38/56

(54) **METAL POWDER**

(30) Priority: 21.03.2025 JP 2025046207
(71) Applicant: Daido Steel Co., Ltd., Nagoya-shi Aichi 461-8581 (JP)
(72) Inventor: OGAWA, Tsubasa, Nagoya-shi, Aichi 457-8545 (JP); HATANAKA, Yui, Nagoya-shi, Aichi 457-8545 (JP); KUMAGAI, Yoshiki, Nagoya-shi, Aichi 457-8545 (JP)
(74) Representative: Diehl & Partner

(57) **Abstract**

The present invention relates to a metal powder, including, in mass%: 1.0% ≤ C ≤ 5.0%; 0% < Si ≤ 2.0%; 0% < Mn ≤ 2.0%; 0.1% ≤ Ni ≤ 5.0%; 10% ≤ Cr ≤ 20%; 0% < Mo ≤ 2.0%; 15% < V ≤ 20%; 0% < W ≤ 2.0%; 0.001% ≤ N; and 0.001% ≤ B, with a balance being Fe and inevitable impurities, and satisfying 0.5 ≤ 10[N]+100[B] ≤ 6.0, where [N] is a concentration (%) of N and [B] is a concentration (%) of B.

## Description

### TECHNICAL FIELD

The present invention relates to a metal powder, and more particularly to a metal powder that can be used for forming a shaped layer on a surface of a substrate in a metal member such as a tool.

### BACKGROUND ART

In various tools such as cutlery, a chipping tool, or a cutting tool, in order to compensate for properties of constituent materials of a cold tool steel or the like and to improve performance of the tool, a coating made of a metal material having high hardness and excellent wear resistance may be formed at a portion where strength is required such as a cutting edge. In order to form the coating, for example, a method of melting a metal powder such as a high-speed steel powder to form a shaped layer on a surface of a substrate is used. As a method of forming a shaped layer by using such a type of metal powder, overlay welding using a laser or a plasma arc as a heat source is used.

A metal powder used for forming a coating having high wear resistance is disclosed in, for example, Patent Literature 1. Patent Literature 1 discloses a powder metal material for use in a thermal spraying technique, the powder metal material containing, based on a total weight of the powder metal material, 3.0 wt% to 7.0 wt% of carbon, 10.0 wt% to 25.0 wt% of chromium, 1.0 wt% to 5.0 wt% of tungsten, 3.5 wt% to 7.0 wt% of vanadium, 1.0 wt% to 5.0 wt% of molybdenum, 0.5 wt% or less of oxygen, and at least 40.0 wt% of iron.

Patent Literature 1: JP 2015-515542A

### SUMMARY OF INVENTION

In metal members such as a tool, a coating that is formed on a surface of a substrate by using a metal powder such as high-speed steel for the purpose of improving the wear resistance often has high hardness and exhibits a high effect of improving the wear resistance. On the other hand, in order to prevent cracks of these metal members, the coating is required to be less likely to crack. However, in the case of a metal powder used in the related art, such as high-speed steel, although a shaped layer having high hardness can be formed by overlay welding or the like, it is difficult to make the formed shaped layer less likely to crack. In particular, in the case of stacking a plurality of shaped layers, the cracks are likely to occur. It is desired to develop a metal powder from which a shaped layer less likely to crack can be formed even when a plurality of layers are stacked.

An object of the present invention is to provide a metal powder from which a shaped layer less likely to crack can be formed.

In order to achieve the above object, a metal powder according to the present invention has the following configuration.
[1] A metal powder,
   includes, in mass%:
      1.0% ≤ C ≤ 5.0%;
      0% < Si ≤ 2.0%;
      0% < Mn ≤ 2.0%;
      0.1% ≤ Ni ≤ 5.0%;
      10% ≤ Cr ≤ 20%;
      0% < Mo ≤ 2.0%;
      15% < V ≤ 20%;
      0% < W ≤ 2.0%;
      0.001 % ≤ N; and
      0.001% ≤ B,
      with a balance being Fe and inevitable impurities, and
   satisfies 0.5 ≤ 10[N]+100[B] ≤ 6.0, where [N] is a concentration (%) of N and [B] is a concentration (%) of B.
[2] The metal powder according to [1], may further satisfy:
   0.010% ≤ N ≤ 0.2% and 0.001% ≤ B ≤ 0.05%.
[3] The metal powder according to [1] or [2], may further satisfy:
   0.05% ≤ Mo ≤ 2.0% and 0.05% ≤ W ≤ 2.0%.
[4] The metal powder according to any one of [1] to [3], may further satisfy:
   0.1% ≤ Si ≤ 2.0%.
[5] The metal powder according to any one of [1] to [4], may further satisfy:
   3.0% ≤ C ≤ 4.0%.
[6] The metal powder according to any one of [1] to [5], may further include, in mass%:
   0% < Co ≤ 3.0%.
[7] The metal powder according to any one of [1] to [6], may have an apparent density of 3.5 × 10³ kg/m³ or more.
[8] The metal powder according to any one of [1] to [7], may have a median diameter d50 of 75 µm or more and 150 µm or less.

Since the metal powder according to the present invention having the above configuration [1] contains the above predetermined amounts of C, Si, Mn, Ni, Cr, Mo, V, W, N, and B, and 10[N]+100[B] is in the predetermined range, a shaped layer formed by overlay welding or the like is less likely to crack. Even in the case of stacking a plurality of shaped layers, the generation of cracks can be prevented. Therefore, when a shaped layer using the present metal powder is formed on a surface of a metal member such as a tool, it is possible to prevent cracks in the metal member.

In the above aspect [2], since the contents of N and B are specified by the predetermined upper limit and lower limit, the shaped layer formed of the metal powder is particularly less likely to crack and has high hardness.

In the above aspect [3], since the contents of Mo and W are specified by the predetermined upper limit and lower limit, the shaped layer formed of the metal powder has high hardness and excellent wear resistance.

In the above aspect [4], since the content of Si is specified by the predetermined upper limit and lower limit, a high deoxidation effect can be obtained during the production of the metal powder.

In the above aspect [5], since the content of C is specified by the predetermined upper limit and lower limit, the shaped layer formed of the metal powder is less likely to crack, has excellent hardness, and has high corrosion resistance.

In the above aspect [6], since the metal powder contains the predetermined amount of Co, it is possible to effectively prevent cracks of the shaped layer formed of the metal powder.

In the above aspect [7], since the metal powder has a sufficiently large apparent density, when forming the shaped layer by overlay welding or the like, the metal powder can be stably supplied, and the generation of defects inside the formed shaped layer can be prevented. Accordingly, the hardness of the shaped layer is improved.

In the above aspect [8], since the metal powder has a median diameter in the predetermined range, the generation of defects inside the formed shaped layer can be prevented. Accordingly, the hardness of the shaped layer is improved.

### DESCRIPTION OF EMBODIMENTS

Hereinafter, a metal powder according to an embodiment of the present invention is described in detail. The metal powder according to the present embodiment is formed as a powder of an alloy material having a predetermined component composition. In the present specification, a content of each element is expressed in unit of mass%. In addition, various properties indicate values in the atmosphere at room temperature (about 20°C).

### [Component Composition of Metal Powder]

The metal powder according to the embodiment of the present invention contains the following predetermined amounts of C, Si, Mn, Ni, Cr, Mo, V, W, N, and B, with the balance being Fe and inevitable impurities. In addition, contents of C and N satisfy a predetermined relationship. An application of the metal powder according to the present embodiment is not limited, and the metal powder can be particularly suitably used for forming a shaped layer by overlay welding.

### 1.0% ≤ C ≤ 5.0%

In the case of forming a shaped layer by overlay welding or the like using the metal powder, the shaped layer has a structure in which precipitates such as a carbide are generated in a matrix mainly made of martensite. In this structure, C dissolves in the matrix, strengthens the matrix, and combines with Cr, Mo, V, and W to form a hard carbide. The carbide has a high effect of improving wear resistance by improving hardness of the shaped layer. In the case of 1.0% ≤ C, a high effect of containing C can be obtained. The C content is more preferably 2.0% ≤ C, and further preferably 3.0% ≤ C.

On the other hand, in the case where a large amount of C is contained, the precipitated carbide is coarsened, the toughness of the shaped layer decreases, and the shaped layer is likely to crack. In addition, in the case where a large amount of C is contained, C is bonded to Cr and a large amount of Cr carbide is crystallized, so that the concentration of Cr in the matrix decreases and corrosion resistance of the shaped layer is likely to decrease. From the viewpoint of making the shaped layer less likely to crack and improving the corrosion resistance, C ≤ 5.0%. The C content is more preferably C ≤ 4.5%, and further preferably C ≤ 4.0%.

### 0% < Si ≤ 2.0%

Si is an element effective for deoxidation. Si exhibits a high effect of promoting the deoxidation even when added in a small amount, and thus a lower limit of the content is not particularly specified. However, in the case of 0.1% ≤ Si and further preferably 0.3% ≤ Si, a high effect of promoting the deoxidation can be obtained.

On the other hand, in the case where a large amount of Si is added, processability and the toughness decrease. The decrease in toughness leads to the shaped layer being likely to crack. From the viewpoint of maintaining high processability and preventing cracks, Si ≤ 2.0%. The Si content is more preferably Si ≤ 1.5% and further preferably Si ≤ 1.0%. The high processability is important in the case where a shaped layer obtained by overlay welding or the like is subjected to machining such as chipping afterward.

### 0% < Mn ≤ 2.0%

Similar to Si, Mn is an element effective for deoxidation. Mn exhibits a high effect of promoting the deoxidation even when added in a small amount, and thus a lower limit of the content is not particularly specified. However, in the case of 0.1% ≤ Mn and further preferably 0.3% ≤ Mn, a high effect of promoting the deoxidation can be obtained.

On the other hand, in the case where a large amount of Mn is added, the processability and the toughness decrease. The decrease in toughness leads to the shaped layer being likely to crack. From the viewpoint of maintaining high processability and preventing cracks, Mn ≤ 2.0%. The Mn content is more preferably Mn ≤ 1.5% and further preferably Mn ≤ 1.0%.

### 0.1% ≤ Ni ≤ 5.0%

Ni is an element effective for improving toughness of the shaped layer. This is because the matrix of the shaped layer is composed mainly of martensite, but the addition of Ni increases the amount of residual austenite and the hardness of a matrix portion is reduced to be low, so that the effect of improving the toughness due to contribution of the matrix is improved. Due to the improvement of the toughness, the shaped layer is less likely to crack. In the case of 0.1% ≤ Ni, the effect of preventing cracks by improving the toughness can be sufficiently obtained. The Ni content is more preferably 0.2% ≤ Ni, and further preferably 0.5% ≤ Ni.

On the other hand, in the case where a large amount of Ni is contained, the hardness and the processability of the shaped layer decrease. From the viewpoint of maintaining high hardness and processability, Ni ≤ 5.0%. The Ni content is more preferably Ni ≤ 3.5% and further preferably Ni ≤ 1.0%.

### 10% ≤ Cr ≤ 20%

Cr contributes to an improvement of hardness of the shaped layer by forming a carbide. In addition, Cr has a high effect of improving corrosion resistance. In the case of 10% ≤ Cr, a sufficient effect of improving the hardness and the corrosion resistance can be obtained. The Cr content is more preferably 12% ≤ Cr, and further preferably 13% ≤ Cr.

On the other hand, in the case where a large amount of Cr is added, productivity of the metal powder decreases. In the case of Cr ≤ 20%, high productivity can be maintained. The Cr content is more preferably Cr ≤ 18%, and further preferably Cr ≤ 15%.

### 0% < Mo ≤ 2.0%

Similar to Cr, Mo is an element effective for forming a carbide and improving the hardness. Mo exhibits a high effect of improving the hardness even when added in a small amount, and thus a lower limit of the content is not particularly specified. However, in the case of 0.05% ≤ Mo and further preferably 0.5% ≤ Mo, a high effect of improving the hardness can be obtained.

On the other hand, in the case where a large amount of Mo is added, the toughness decreases. The decrease in toughness leads to the shaped layer being likely to crack. From the viewpoint of maintaining high toughness and preventing cracks, Mo ≤ 2.0%. The Mo content is more preferably Mo ≤ 1.5% and further preferably Mo ≤ 1.0%.

### 15% < V ≤ 20%

Similar to Cr and Mo, V contributes to the improvement of the hardness by bonding to C to form a carbide. In the shaped layer using the metal powder according to the present embodiment, a plurality of metals form carbides and contribute to the improvement of the hardness, and among the various metals, V particularly forms an extremely hard and fine carbide, and thus exhibits an important contribution to the improvement of the hardness. In addition, in the case where the shaped layer is formed by overlay welding or the like, a V carbide of a primary crystal plays an important role in controlling the structure during solidification of the molten metal material. From the viewpoint of a balance with the content of C, in the case of 15% < V, a high effect of the formation of the V carbide can be obtained. The V content is more preferably 15.5% ≤ V, and further preferably 16% ≤ V

On the other hand, in the case where a large amount of V is added, the carbide is coarsened and the toughness decreases. The decrease in toughness leads to the shaped layer being likely to crack. From the viewpoint of maintaining high toughness and preventing cracks, V ≤ 20%. The V content is more preferably V ≤ 18%, and further preferably V ≤ 17%.

### 0% < W ≤ 2.0%

Similar to Cr, Mo, and V, W is an element effective for forming a carbide and improving the hardness. W exhibits a high effect of improving the hardness even when added in a small amount, and thus a lower limit of the content is not particularly specified. However, in the case of 0.05% ≤ W and further preferably 0.5% ≤ W, a high effect of improving the hardness can be obtained.

On the other hand, in the case where a large amount of W is added, the toughness decreases. The decrease in toughness leads to the shaped layer being likely to crack. From the viewpoint of maintaining high toughness and preventing cracks, W ≤ 2.0%. The W content is more preferably W ≤ 1.8%, and further preferably W ≤ 1.5%.

### 0.001% ≤ N

N has an effect of improving the hardness by forming a carbonitride. Further, N dissolves in the matrix and improves the toughness, and thus plays a role in preventing cracks of the shaped layer. In the case of 0.001% ≤ N, a high effect of improving the hardness and the toughness can be obtained. The N content is more preferably 0.005% ≤ N, further preferably 0.010% ≤ N, and still further preferably 0.020% ≤ N.

In the case where a large amount of N is contained, the toughness decreases, and the shaped layer tends to be likely to crack. However, in the metal powder according to the present embodiment, as to be described later, in the case where 10[N]+100[B] falls within a range of a predetermined upper limit or less, cracks of the shaped layer can be sufficiently prevented and thus, an upper limit of the content of N alone is not particularly determined. However, in the case of N ≤ 0.2% and further preferably N ≤ 0.15%, cracks can be more effectively prevented. Note that, [N] and [B] represent the concentrations of N and B, respectively, in unit of mass%.

### 0.001% ≤ B

B segregates at grain boundaries and plays a role in preventing cracks of the shaped layer by improving grain boundary strength. In the case of 0.001% ≤ B, a high effect of preventing cracks can be obtained. The B content is more preferably 0.002% ≤ B.

On the other hand, B dissolves in the matrix in the shaped layer and has an action of strengthening the matrix, and therefore, in the case where B is added in a large amount, the toughness can be decreased. Therefore, in the case where a large amount of B is contained, the toughness decreases, and the shaped layer is likely to crack. However, in the metal powder according to the present embodiment, as to be described later, in the case where 10[N]+100[B] falls within a range of a predetermined upper limit or less, cracks of the shaped layer can be sufficiently prevented and thus, an upper limit of the content of B alone is not particularly determined. However, in the case of B ≤ 0.05% and further B ≤ 0.01%, cracks can be more effectively prevented.

### 0.5 ≤ 10[N]+100[B] ≤ 6.0

In the metal powder according to the present embodiment, the individual contents of N and B satisfy the above ranges, and 10[N]+100[B] is in a range of 0.5 or more and 6.0 or less, where [N] is the concentration (%) of N and [B] is the concentration (%) of B, in unit of mass%. In the case where 10[N]+100[B] is 0.5 or more, the toughness of the shaped layer is improved, and the shaped layer is less likely to crack. It is more preferable that 1.0 ≤ 10[N]+100[B] is satisfied, and further preferable that 1.2 ≤ 10[N]+100[B] is satisfied.

However, in the case where the contents of N and B are too large, the toughness of the shaped layer decreases. In the case of 10[N]+100[B] ≤ 6.0, high toughness of the shaped layer can be maintained, and cracks can be effectively prevented. It is more preferable that 10[N]+100[B] ≤ 5.0 is satisfied, and further preferable that 10[N]+100[B] ≤ 2.0 is satisfied.

The metal powder according to the present embodiment may contain only the above predetermined amounts of C, Ni, Cr, V, N, and B, and if necessary, Si, Mn, Mo, and W, as essential elements in addition to Fe and inevitable impurities, or may also contain the following predetermined amount of Co as an optional element.

### 0% < Co ≤ 3.0%

Similar to Ni, Co is an element effective for preventing cracks by improving the toughness. Co exhibits a high effect of improving the toughness even when added in a small amount, and thus a lower limit of the content is not particularly specified. However, in the case of 0.01 % ≤ Co and further preferably 0.02% ≤ Co, a high effect of improving the toughness and preventing cracks can be obtained.

On the other hand, in the case where a large amount of Co is added, the processability decreases. From the viewpoint of maintaining high processability, Co ≤ 3.0%. The Co content is more preferably Co ≤ 2.0% and further preferably Co ≤ 1.0%. Co of 0.02% or less is considered as an inevitable impurity.

The inevitable impurities are allowed to be contained as long as the properties of the metal powder or the shaped layer formed of the metal powder are not greatly impaired. Examples of the inevitable impurities that can be contained in the metal powder include O, P, S, Cu, Te, As, Sn, Sb, Se, Ce, Pb, Bi, Zn, Hg, Mg, Ca, Al, Ti, Nb, Ta, and Zr. The content of these impurity elements is preferably reduced to less than 0.05% for each element. However, the contribution of oxidation to the surface of the metal powder is excluded.

### [Properties of Metal Powder]

Since the metal powder according to the present embodiment has the above component composition, a shaped layer less likely to crack can be formed by forming the shaped layer through melting and solidification by overlay welding or the like. Even in the case where a plurality of shaped layers are stacked, a state where cracks are less likely to occur can be maintained. Mainly because Ni is contained in a sufficient amount, N and B are contained in appropriate amounts, and the contents of C, Si, Mn, and Mo, which decrease the toughness when contained in a large amount, are limited, a high effect of improving toughness of the shaped layer and preventing cracks due to the improvement of the toughness can be obtained.

Further, in the case where a sufficient amount of C is contained together with Cr, Mo, V, and W, the shaped layer has high hardness and excellent wear resistance due to the formation of metal carbides. For example, the hardness of an overlay welded layer can be 55 HRC or more, and further preferably 60 HRC or more. In addition, in the case where the content of C is appropriately reduced, the shaped layer also has excellent corrosion resistance.

Since the shaped layer formed of the metal powder is less likely to crack and can exhibit high hardness, the metal powder can be suitably used for forming a shaped layer by overlay welding on various metal members including tools such as cutlery, a chipping tool, or a cutting tool. Further, in the case where the shaped layer has high corrosion resistance, the state of the shaped layer less likely to crack is satisfactorily maintained even in a corrosive environment, so that the metal powder can be particularly suitably applied to a metal member to be used in an environment where corrosion is likely to occur. However, the application of the metal powder according to the present embodiment is not limited to overlay welding to a metal member such as a tool, and can be used for various applications such as formation of a coating by a method other than overlay welding including thermal spraying, and additive manufacturing.

An apparent density (bulk density) of the metal powder according to the present embodiment is not particularly limited, and is preferably 3.5 × 10³ kg/m³ or more. Then, when forming a shaped layer by overlay welding or the like, the metal powder can be stably supplied. As a result, the generation of defects inside the formed shaped layer can be prevented. When the internal defects are prevented, the hardness of the shaped layer is improved. The apparent density is preferably 3.8 × 10³ kg/m³ or more, and more preferably 4.0 × 10³ kg/m³ or more. An upper limit of the apparent density is not particularly set, and is approximately 5.0 × 10³ kg/m³.

A particle diameter of the metal powder according to the present embodiment is not particularly limited, and it is preferable that a median diameter d50 is 75 µm or more and 150 µm or less. In the case where the median diameter is 75 µm or more, handleability of the metal powder is improved. The median diameter is more preferably 90 µm or more. On the other hand, in the case where the median diameter is 150 µm or less, the generation of defects inside the formed shaped layer can be prevented. When the internal defects are prevented, the hardness of the shaped layer is improved. The median diameter is more preferably 135 µm or less, and still more preferably 120 µm or less.

A method for producing the metal powder according to the present embodiment is not particularly limited, and for example, the metal powder can be produced by melting an alloy material and pulverizing the alloy material by using an atomization method. As the atomization method, a water atomization method or a gas atomization method can be used. The obtained metal powder may be appropriately sieved.

A method for forming the shaped layer from the metal powder according to the present embodiment is not particularly limited. For example, overlay welding using laser metal deposition (LMD) or plasma transferred arc (PTA) welding may be performed.

### EXAMPLES

Hereinafter, the present invention is described more specifically with reference to Examples. Note that, the present invention is not limited by these Examples.

### [Preparation of Sample]

As metal powders according to Examples 1 to 11 and Comparative Examples 1 to 8, metal powders containing respective component elements at the concentrations shown in Table 1, with the balance being Fe and inevitable impurities, were prepared. At this time, an alloy having a predetermined component composition ratio was melted, and a metal powder was obtained by a gas atomization method using nitrogen.

Further, in order to perform various evaluations, a shaped article was prepared by using each metal powder prepared above. The shaped article was prepared by overlay welding using plasma transferred arc (PTA) welding. Specifically, three shaped layers were stacked on a surface of a substrate by overlay welding.

### [Evaluation Method]

The metal powder and the shaped article prepared as described above were subjected to the following evaluations. Each evaluation is performed at room temperature in the atmosphere unless otherwise specified.

### (1) Measurement of Particle Diameter

The particle size distribution of each metal powder was measured in accordance with JIS Z 8825:2022 by using a laser diffraction/scattering measuring machine. In the obtained particle size distribution, the median diameter d50 was determined as a particle diameter at which the undersize integrated fraction was 50%.

### (2) Measurement of Apparent Density

The apparent density of each metal powder was measured in accordance with JIS Z 2504:2020 by using a metal powder bulk density measuring instrument.

### (3) Checking of Cracks

The presence or absence of cracks was visually checked for the shaped article subjected to overlay welding of three layers. A sample in which no cracks were observed was evaluated as having sufficient prevention of cracks (A). On the other hand, a sample in which cracks were visually observed was evaluated as having no sufficient prevention of cracks (B).

### (4) Hardness Measurement

The hardness was further measured for the sample evaluated as having sufficient prevention of cracks (A) in the above "Checking of Cracks". As a measurement sample, in the shaped article subjected to overlay welding of three layers, a surface layer of a surface of the overlay welded portion was ground by about 0.5 mm by using a surface grinder. The hardness of the processed surface subjected to grinding was measured. The hardness was measured in accordance with the Rockwell hardness test in JIS B7726:2017. Among seven points measured at a pitch of 5 mm in the processed surface, five points excluding two points having the smallest value and the largest value were averaged to obtain an average value, which was recorded as a hardness value. In the case where the obtained hardness value was 60 HRC or more, the hardness was evaluated as high (A). In the case where the hardness value was 55 HRC or more and less than 60 HRC, the hardness was evaluated as sufficient (B). On the other hand, in the case where the hardness value was less than 55 HRC, the hardness was evaluated as low (C).

### (5) Evaluation of Corrosion Resistance

The corrosion resistance was further evaluated for the sample evaluated as having sufficient prevention of cracks (A) in the above "Checking of Cracks" and evaluated as having high hardness (A) or sufficient hardness (B) in the above "Hardness Measurement". Specifically, a neutral salt spray test was performed in accordance with JIS Z2371:2015. As an evaluation sample, a surface of an overlay welded portion of a shaped article (maximum height of overlay welded portion: 5 mm) obtained by performing overlay welding of three layers was ground by about 2 mm by using a surface grinder to obtain a test piece. In the test piece, the surface of the ground overlay welded portion was a flat surface having an area of 600 mm² or more. After salt spraying was performed on this test piece for 24 hours, the ground surface of the overlay welded portion was visually observed. In the case where rust did not occur and the case where rust did not reach the entire surface of the overlay welded portion, the corrosion resistance was evaluated as high (A). On the other hand, in the case where rust occurred on the entire surface of the overlay welded portion, the corrosion resistance was evaluated as low (B).

### (6) Comprehensive Evaluation

The results in the Checking of Cracks, the Hardness Measurement, and the Evaluation of Corrosion Resistance were combined to evaluate the properties of the metal powder. For the sample found to have sufficient prevention of cracks (A) and evaluated as having high hardness (A) and high corrosion resistance (A), the properties were evaluated as particularly excellent (A). Among samples found to have sufficient prevention of cracks (A), a sample evaluated as having sufficient hardness (B) and a sample evaluated as having low corrosion resistance (B) but evaluated as having high hardness (A) were evaluated as having good properties (B). A sample evaluated as having no sufficient prevention of cracks (B) and a sample evaluated as having sufficient prevention of cracks (A) but evaluated as having low hardness (C) were evaluated as having no sufficient properties (C).

### [Test Results]

Table 1 shows the component compositions of the metal powders for Examples 1 to 11 and Comparative Examples 1 to 8. Table 2 shows the results of the evaluations.

**Table 1**

| | | Component element (mass%) | | | | | | | | | | | | | | |
|---|---|---|---|---|---|---|---|---|---|---|---|---|---|---|---|---|
| | | C | Si | Mn | Ni | Cr | Mo | V | W | N | B | Co | Cu | P | S | O |
| | 1 | 3.6 | 0.88 | 0.57 | 0.5 | 13.0 | 0.8 | 16.7 | 1.3 | 0.13 | 0.001 | 0.02 | 0.02 | 0.002 | 0.004 | 0.03 |
| | 2 | 3.6 | 0.88 | 0.57 | 0.5 | 13.0 | 0.8 | 16.7 | 1.3 | 0.13 | 0.001 | 0.02 | 0.02 | 0.002 | 0.004 | 0.03 |
| | 3 | 3.6 | 0.88 | 0.57 | 0.5 | 13.0 | 0.8 | 16.7 | 1.3 | 0.13 | 0.001 | 0.02 | 0.02 | 0.002 | 0.004 | 0.03 |
| | 4 | 3.8 | 0.71 | 0.42 | 0.2 | 18.4 | 0.5 | 16.2 | 1.1 | 0.11 | 0.002 | 0.02 | 0.01 | 0.002 | 0.003 | 0.03 |
| Ex. | 5 | 3.7 | 0.50 | 0.36 | 0.3 | 12.5 | 1.5 | 16.5 | 0.9 | 0.13 | 0.003 | 0.02 | 0.01 | 0.002 | 0.002 | 0.02 |
| | 6 | 3.2 | 0.30 | 0.36 | 3.4 | 13.4 | 0.7 | 16.5 | 0.9 | 0.03 | 0.003 | 0.02 | 0.01 | 0.002 | 0.002 | 0.02 |
| | 7 | 3.4 | 0.52 | 0.44 | 0.2 | 15.5 | 1.2 | 15.5 | 0.5 | 0.11 | 0.002 | 1.50 | 0.01 | 0.002 | 0.003 | 0.02 |
| | 8 | 2.8 | 0.78 | 0.44 | 0.4 | 13.2 | 1.0 | 15.5 | 1.2 | 0.11 | 0.002 | 0.02 | 0.02 | 0.001 | 0.004 | 0.02 |
| | 9 | 4.2 | 0.44 | 0.51 | 0.7 | 12.8 | 0.6 | 16.5 | 1.2 | 0.08 | 0.003 | 0.02 | 0.02 | 0.002 | 0.003 | 0.02 |
| | 10 | 3.1 | 0.70 | 0.34 | 0.9 | 13.4 | 1.4 | 17.2 | 0.7 | 0.08 | 0.04 | 0.03 | 0.01 | 0.002 | 0.002 | 0.02 |
| | 11 | 3.5 | 0.55 | 0.45 | 0.5 | 14.5 | 0.7 | 18.1 | 0.9 | 0.01 | 0.01 | 0.02 | 0.01 | 0.002 | 0.003 | 0.02 |
| Comp. Ex. | 1 | 3.6 | 0.88 | 0.57 | 0.5 | 13.0 | 1.5 | 16.7 | 1.3 | 0.25 | 0.04 | 0.02 | 0.02 | 0.002 | 0.004 | 0.02 |
| | 2 | 3.4 | 0.70 | 0.54 | 0.5 | 12.6 | 0.8 | 15.5 | 1.1 | 0.11 | 0.05 | 0.02 | 0.02 | 0.003 | 0.004 | 0.02 |
| | 3 | 3.8 | 0.89 | 0.60 | 0.4 | 12.8 | 1.3 | 16.6 | 1.4 | 0.20 | - | 0.01 | 0.02 | 0.002 | 0.002 | 0.03 |
| | 4 | 5.3 | 0.90 | 0.44 | 0.4 | 12.5 | 1.2 | 15.5 | 0.9 | 0.11 | 0.001 | 0.03 | 0.01 | 0.005 | 0.003 | 0.02 |
| | 5 | 3.5 | 0.65 | 0.54 | 0.4 | 12.8 | 1.3 | 16.5 | 1.3 | 0.01 | 0.002 | 0.02 | 0.02 | 0.001 | 0.004 | 0.03 |
| | 6 | 4.5 | 0.90 | 0.43 | - | 13.1 | 1.4 | 17.1 | 1.3 | 0.11 | 0.002 | 0.02 | 0.02 | 0.001 | 0.004 | 0.02 |
| | 7 | 0.9 | 0.52 | 0.44 | 0.3 | 13.5 | 0.8 | 15.6 | 1.1 | 0.12 | 0.002 | 0.03 | 0.03 | 0.003 | 0.004 | 0.04 |
| | 8 | 3.4 | 0.87 | 0.34 | 0.4 | 12.0 | 0.8 | 14.4 | 1.2 | 0.11 | 0.001 | 0.03 | 0.03 | 0.003 | 0.003 | 0.03 |

**Table 2**

| | | 10[N]+ 100[B] | Median diameter d50 (µm) | Apparent density (10³ kg/m³) | Evaluation result | | | |
|---|---|---|---|---|---|---|---|---|
| | | | | | Crack prevention | Hardness (HRC) | Corrosion resistance | Comprehensive evaluation |
| | 1 | 1.4 | 102 | 4.3 | A | 62 A | A | A |
| | 2 | 1.4 | 135 | 3.8 | A | 62 A | A | A |
| | 3 | 1.4 | 175 | 3.6 | A | 58 B | A | B |
| | 4 | 1.3 | 110 | 4.2 | A | 63 A | A | A |
| | 5 | 1.6 | 97 | 3.8 | A | 63 A | A | A |
| Ex. | 6 | 0.6 | 125 | 4.1 | A | 61 A | A | A |
| | 7 | 1.3 | 132 | 3.9 | A | 61 A | A | A |
| | 8 | 1.3 | 102 | 4.2 | A | 58 B | A | B |
| | 9 | 1.1 | 111 | 4.2 | A | 64 A | B | B |
| | 10 | 4.8 | 105 | 3.8 | A | 62 A | A | A |
| | 11 | 0.6 | 130 | 4.1 | A | 62 A | A | A |
| Comp. Ex. | 1 | 6.5 | 128 | 4.2 | B | - | - | C |
| | 2 | 6.1 | 130 | 4.2 | B | - | - | C |
| | 3 | 1.9 | 104 | 3.8 | B | - | - | C |
| | 4 | 1.2 | 121 | 3.9 | B | - | - | C |
| | 5 | 0.3 | 131 | 4.1 | B | - | - | C |
| | 6 | 1.3 | 110 | 4.2 | B | - | - | C |
| | 7 | 1.4 | 120 | 4.2 | A | 52 C | - | C |
| | 8 | 1.2 | 113 | 4.2 | A | 53 C | - | C |

In Table 1, the metal powders in Examples 1 to 11 had the component composition according to the embodiment of the present invention described above. Correspondingly, the shaped layers formed of all of these metal powders could have evaluation results of sufficient prevention of cracks (A) in the crack checking test.

Further, in Examples 1, 2, 4 to 7, and 9 to 11 in which the content of C was 3.0 mass% or more and the median diameter of the metal powder was reduced to 150 µm or less, high hardness of 60 HRC or more could be obtained. In addition, in Examples 1 to 8, 10, and 11 in which the content of C was reduced to 4.0 mass% or less, high corrosion resistance could be obtained. In Examples 1, 2, 4 to 7, 10, and 11, high evaluation results could be obtained in all of the prevention of cracks, the hardness, and the corrosion resistance, and in the comprehensive evaluation, the metal powders were evaluated as having particularly excellent properties.

Unlike Examples 1 to 11 described above, in Comparative Examples 1 to 8, the metal powders did not satisfy the component composition according to the embodiment of the present invention, so that no sufficient effect of preventing cracks of the shaped layer could be obtained. Alternatively, although cracks of the shaped layer could be prevented, no sufficient hardness could be ensured.

In all of Comparative Examples 1 to 6, cracks of the shaped layer could not be sufficiently prevented. Among them, in Comparative Examples 1 and 2, 10[N]+100[B] was more than 6.0. In contrast, in Comparative Example 5, 10[N]+100[B] was less than 0.5. In addition, in Comparative Example 3, 10[N]+100[B] was in the range of 0.5 or more and 6.0 or less, but B was not contained. From these results, it can be seen that in the case where the metal powder contained B and N at a predetermined lower limit or more but 10[N]+100[B] was not in the range of 0.5 or more and 6.0 or less, no sufficient effect of preventing cracks of the shaped layer could be obtained.

In Comparative Example 4, the content of C was more than 5.0%, and in Comparative Example 6, Ni was not contained. From these results, it can be said that it is also important to reduce the content of C so as not to be excessive and to contain a sufficient amount of Ni to improve the toughness in order to preventing cracks of the shaped layer.

In Comparative Example 7, the content of C was less than 1.0%. In addition, in Comparative Example 8, the content of V was less than 15%. In Comparative Examples 7 and 8, cracks of the shaped layer were prevented, but the hardness was low. This is considered to be because a carbide having an effect of improving the hardness could not be sufficiently formed, and it can be said that it is important to contain a metal constituting a carbide, such as V, in a sufficient amount together with C in order to ensure sufficient hardness while preventing cracks in the shaped layer.

The embodiments and Examples of the present invention have been described above. The present invention is not particularly limited to these embodiments and Examples, and various modifications may be made.

The present application is based on Japanese Patent Application No. 2025-046207 filed on March 21, 2025, the contents thereof being hereby incorporated by reference.

## Claims

1. A metal powder,
consisting of, in mass%:
1.0% ≤ C ≤ 5.0%;
0% < Si ≤ 2.0%;
0% < Mn ≤ 2.0%;
0.1% ≤ Ni ≤ 5.0%;
10% ≤ Cr ≤ 20%;
0% < Mo ≤ 2.0%;
15% < V ≤ 20%;
0% < W ≤ 2.0%;
0.001% ≤ N;
0.001% ≤ B,
Co ≤ 3.0%,
O < 0.05%,
P < 0.05%,
S < 0.05%,
Cu < 0.05%,
Te < 0.05%,
As < 0.05%,
Sn < 0.05%,
Sb < 0.05%,
Se < 0.05%,
Ce < 0.05%,
Pb < 0.05%,
Bi < 0.05%,
Zn < 0.05%,
Hg < 0.05%,
Mg < 0.05%,
Ca < 0.05%,
Al < 0.05%,
Ti < 0.05%,
Nb < 0.05%,
Ta < 0.05%, and
Zr < 0.05%,
with a balance being Fe and inevitable impurities, and
satisfying 0.5 ≤ 10[N]+100[B] ≤ 6.0, where [N] is a concentration (%) of N and [B] is a concentration (%) of B.

2. The metal powder according to claim 1, further satisfying:
0.010% ≤ N ≤ 0.2% and 0.001% ≤ B ≤ 0.05%.

3. The metal powder according to claim 1 or 2, further satisfying:
0.05% ≤ Mo ≤ 2.0% and 0.05% ≤ W ≤ 2.0%.

4. The metal powder according to any one of claims 1 to 3, further satisfying:
0.1% ≤ Si ≤ 2.0%.

5. The metal powder according to any one of claims 1 to 4, further satisfying:
3.0% ≤ C ≤ 4.0%.

6. The metal powder according to any one of claims 1 to 5, further satisfying, in mass%:
0% < Co ≤ 3.0%.

7. The metal powder according to any one of claims 1 to 6, having an apparent density in accordance with JIS Z 2504:2020 of 3.5 × 10³ kg/m³ or more.

8. The metal powder according to any one of claims 1 to 7, having a volume-based median diameter d50 in accordance with JIS Z 8825:2022 of 75 µm or more and 150 µm or less.

9. Use of the metal powder according to any one of claims 1 to 8, for forming a shaped layer on a surface of a substrate in a metal member.

10. The use according to claim 9, wherein the metal member is a tool.

11. The use according to claim 9 or 10, wherein a plurality of shaped layers are stacked.

12. The use according to one of claims 9 to 11, wherein overlay welding is used.

13. The use according to claim 12, wherein the overlay welding uses laser metal deposition, LMD, welding or plasma transferred arc, PTA, welding.

14. A method of manufacturing the metal powder according to any one of claims 1 to 8, the method comprising melting an alloy material and pulverizing it using an atomization method.

15. The method according to claim 14, wherein the pulverized alloy material is appropriately sieved.
